(19) Europäisches Patentamt
European Patent Office
Office européen des brevets

(11) **EP 4 745 848 A1**

(12) **EUROPEAN PATENT APPLICATION**
published in accordance with Art. 153(4) EPC

(43) Date of publication:
**20.05.2026 Bulletin 2026/21**

(21) Application number: **24843110.8**

(22) Date of filing: **12.07.2024**

(51) International Patent Classification (IPC):
**G06N 10/20** (2022.01)    **G06N 99/00** (2019.01)

(52) Cooperative Patent Classification (CPC):
**G06N 10/20; G06N 99/00**

(86) International application number:
**PCT/JP2024/025394**

(87) International publication number:
**WO 2025/018320 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.07.2023 JP 2023116311**

(71) Applicant: **QunaSys Inc.
Bunkyo-ku
Tokyo 113-0001 (JP)**

(72) Inventor: **KANNO, Keita
Tokyo 113-0001 (JP)**

(74) Representative: **AWA Sweden AB
Box 5117
200 71 Malmö (SE)**

(54) **QUANTUM INFORMATION PROCESSING METHOD, QUANTUM INFORMATION PROCESSING PROGRAM, CLASSICAL COMPUTER, AND HYBRID SYSTEM**

(57)    A classical computer transmits, to a quantum computer, information related to a coefficient matrix when an equation of motion of a target system is expressed in a matrix format, and a quantum circuit that was generated based on a quantum state $|\psi\rangle$ corresponding to an eigenstate of the target system and that is a quantum circuit for executing quantum phase estimation. The quantum computer acquires a measurement result of an eigenvalue of the coefficient matrix by executing the quantum circuit and transmits the eigenvalue measurement result to the classical computer. The classical computer computes an eigenfrequency of the target system based on the eigenvalue measurement result.

FIG.1

**Description**

Technical Field

Technology disclosed herein relates to a quantum information processing method, a quantum information processing program, a classical computer, and a hybrid system.

Background Art

A quantum phase estimation algorithm is hitherto known. A quantum phase estimation algorithm is an algorithm capable of solving a so-called eigenvalue problem.

SUMMARY OF INVENTION

Technical Problem

However, literature 1 (A.Yu.Kitaev, "Quantum measurements and the Abelian Stabilizer Problem", https://arxiv.org/abs/quant-ph/9511026) is not a disclosure related to computing an eigenfrequency using a quantum phase estimation algorithm.

In consideration of the above circumstances, an object of technology disclosed herein is to provide a quantum information processing method, a quantum information processing program, a classical computer, and a hybrid system capable of computing an eigenfrequency of a target system using the quantum phase estimation algorithm.

Solution to Problem

A quantum information processing method of a first aspect of the present disclosure is a quantum information processing method for execution by a classical computer in a hybrid system including the classical computer and a quantum computer. The quantum information processing method includes the classical computer transmitting, to the quantum computer, information related to a coefficient matrix when an equation of motion of a target system is expressed in a matrix format, and a quantum circuit that was generated based on a quantum state $|\psi>$ corresponding to an eigenstate of the target system and that is a quantum circuit for executing quantum phase estimation, the quantum computer acquiring a measurement result of an eigenvalue of the coefficient matrix by executing the quantum circuit and transmitting the eigenvalue measurement result to the classical computer, and the classical computer computing an eigenfrequency of the target system based on the eigenvalue measurement result.

A quantum information processing program of a second aspect of the present disclosure is a quantum information processing program for execution by a classical computer in a hybrid system including the classical computer and a quantum computer. The quantum information processing program causes the classical computer to execute processing including the classical computer transmitting, to the quantum computer, information related to a coefficient matrix when an equation of motion of a target system is expressed in a matrix format, and a quantum circuit that was generated based on a quantum state $|\psi>$ corresponding to an eigenstate of the target system and that is a quantum circuit for executing quantum phase estimation, the quantum computer acquiring a measurement result of an eigenvalue of the coefficient matrix by executing the quantum circuit and transmitting the eigenvalue measurement result to the classical computer, and the classical computer computing an eigenfrequency of the target system based on the eigenvalue measurement result.

A hybrid system of a third aspect of the present disclosure is a hybrid system including hybrid system including a classical computer and a quantum computer. In the hybrid system the classical computer transmits, to the quantum computer, information related to a coefficient matrix when an equation of motion of a target system is expressed in a matrix format, and a quantum circuit that was generated based on a quantum state $|\psi>$ corresponding to an eigenstate of the target system and that is a quantum circuit for executing quantum phase estimation, the quantum computer acquires a measurement result of an eigenvalue of the coefficient matrix by executing the quantum circuit and transmits the eigenvalue measurement result to the classical computer, and the classical computer computes an eigenfrequency of the target system based on the eigenvalue measurement result.

Advantageous Effects

Technology disclosed herein exhibits the advantageous effect of enabling computation of an eigenfrequency of a target system using a quantum phase estimation algorithm.

BRIEF DESCRIPTION OF DRAWINGS

Fig. 1 is a diagram illustrating an example of a schematic configuration of a hybrid system 100 of the present exemplary embodiment.

Fig. 2 is a schematic block diagram of a computer functioning as a classical computer 110, a control device 121, and a user terminal 130.

Fig. 3 is a diagram illustrating an example of a quantum circuit for executing quantum phase estimation.

Fig. 4 is a diagram illustrating an example of a quantum circuit for executing quantum phase estimation.

Fig. 5 is a diagram to explain an adder.

Fig. 6 is a diagram to explain a first oracle quantum circuit $O_F$.

Fig. 7 is a diagram to explain a second oracle quantum circuit $O_H$.

Fig. 8 is a diagram to explain a corrected second oracle quantum circuit $O_H$.

Fig. 9 is a diagram illustrating an example of a sequence of executions by a hybrid system 100 of the present exemplary embodiment.

Fig. 10 is a diagram to explain an Example.

Fig. 11 is a diagram to explain an Example.

Fig. 12 is a diagram to explain an Example.

Fig. 13 is a diagram to explain an Example.

Fig. 14 is a diagram to explain an Example.

Fig. 15 is a diagram to explain an Example.

DESCRIPTION OF EMBODIMENTS

Detailed explanation follows regarding exemplary embodiments of technology disclosed herein, with reference to the drawings.

Hybrid System 100 According to Exemplary Embodiment

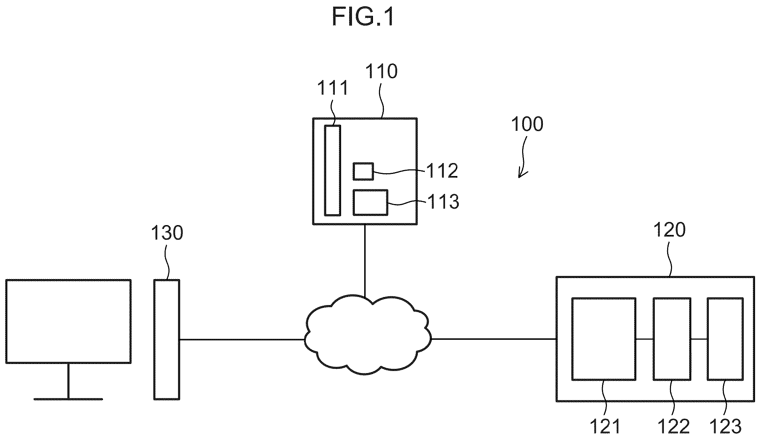

Fig. 1 illustrates a hybrid system 100 according to a first exemplary embodiment. The hybrid system 100 of the present exemplary embodiment includes a classical computer 110 serving as an example of an information processing device, a quantum computer 120, and a user terminal 130. As illustrated in Fig. 1, the classical computer 110, the quantum computer 120, and the user terminal 130 are connected together, for example, over a computer network such as an IP network.

In the hybrid system 100 of the present exemplary embodiment, the quantum computer 120 performs specific quantum computations in response to requests from the classical computer 110, and then outputs the computation results of such quantum computations to the classical computer 110. The classical computer 110 then outputs computation results corresponding to the quantum computations to the user terminal 130. Specific computation processing is accordingly executed by the hybrid system 100 as a whole.

The classical computer 110 includes a communication section 111 such as a communication interface, a processing section 112 such as a processor, a central processing unit (CPU), or the like, and an information storage section 113 including a storage device such as memory or a hard disk, or a storage medium, and the classical computer 110 is configured to perform various processing by executing a program. The classical computer 110 may include a server configured by one or plural devices. The program may be one program, or may include plural programs, and may be configured as a non-transitory program product recorded on a computer-readable storage medium.

As an example, based on information transmitted from the classical computer 110, the quantum computer 120 generates an electromagnetic wave for irradiating onto at least one qubit out of a qubit cluster 123. The quantum computer 120 then executes the quantum circuit by irradiating the generated electromagnetic wave onto the at least one qubit out of the qubit cluster 123.

In the example illustrated in Fig. 1, the quantum computer 120 includes a control device 121 to perform communication with the classical computer 110, an electromagnetic wave generation device 122 to generate an electromagnetic wave in response to requests from the control device 121, and the qubit cluster 123 subjected to irradiation of an electromagnetic wave from the electromagnetic wave generation device 122. The electromagnetic wave generation device 122 and the qubit cluster 123 of the quantum computer 120 also configure a quantum processing unit (QPU). Note that in the present exemplary embodiment, "quantum computer" does not mean a computer that does not perform any computation using classical bits at all, and instead refers to a computer including at least some computation with qubits, or a computer that imitates the behavior of a quantum computer. A computer that imitates the behavior of a quantum computer is, for example, a classical computer executing a quantum simulation.

The control device 121 is a classical computer that performs computation using classical bits, and performs some or all of the processing that is described in the present specification as being performed by the classical computer 110, on behalf thereof.

The user terminal 130 is a classical computer that performs computation using classical bits. The user terminal 130 receives information input by a user, and executes processing in response to this information.

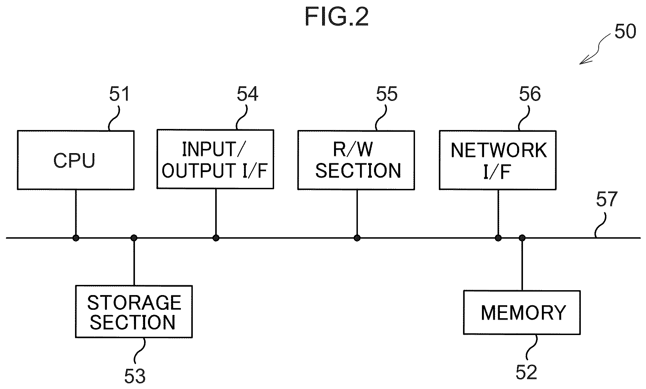

The classical computer 110, the control device 121, and the user terminal 130 may, for example, be implemented by a computer 50, illustrated in Fig. 2. The computer 50 includes a central processing unit (CPU) 51, memory 52 serving as a temporarily storage space, and a non-volatile storage section 53. The computer 50 further includes an input/output interface (I/F) 54 connected to an external device, an output device, or the like, and a read/write (R/W) section 55 that controls the reading and writing of data to a recording medium. The computer 50 further includes a network I/F 56 for connection to a network such as the internet. The CPU 51, the memory 52, the storage section 53, the input/output I/F 54, the R/W section 55, and the network I/F 56 are connected together through a bus 57.

Present Exemplary Embodiment: Outline

The hybrid system 100 of the present exemplary embodiment computes an eigenfrequency of a target system using a quantum phase estimation algorithm. Specifically, the hybrid system 100 of the present exemplary embodiment computes the eigenfrequency of a target system using a quantum phase estimation algorithm, in consideration of the following four points.

(1) An eigenfrequency initial state preparation method.
(2) Implementation of a first oracle quantum circuit $O_F$ and a second oracle quantum circuit $O_H$.
(3) Implementation of a first oracle quantum circuit $O_F$ and a modified second oracle quantum circuit $O_H^{mod}$.
(4) Implementation of a quantum circuit considering an iterative structure of a target system.

Specific description thereof is given below.

Quantum Phase Estimation

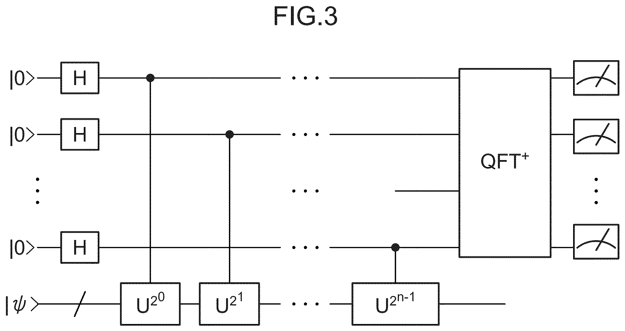

Fig. 3 is an example of a quantum circuit for executing quantum phase estimation. As illustrated in Fig. 3, when a quantum state $|\psi\rangle$ is input to a quantum circuit for executing quantum phase estimation, a single eigen value is output as a measurement result. The quantum state $|\psi\rangle$ represents an eigen vector close to an eigen vector (eigenstate) of the target system.

Note that when the size of a matrix requiring an eigenvalue problem solution is $N \times N$, then a relationship between a qubit number n of the quantum state $|\psi\rangle$ and matrix size is $N = 2^n$.

For example, an eigen vector $(c_0, c_1, ..., c_{N-1})$ of the target system, and the corresponding quantum state $|\psi\rangle$, have a one-to-one correspondence as in the following equation.

$$|\psi\rangle = c_0 |00\ldots00\rangle + c_1 |00\ldots01\rangle + \cdots + c_{N-1} |11\ldots11\rangle$$

$|0\rangle$ of Fig. 3 represents an auxiliary qubit, and $|0\rangle$ represents that the auxiliary qubit is a 0 state. When the quantum circuit is executed, qubits thereof output an eigenvalue from the quantum circuit. Note that when the quantum circuit has been executed, each of the qubits illustrated in Fig. 3 holds a value of respective digit values for the eigenvalue that is the output result as expressed in binary.

Moreover, H in the quantum circuit illustrated in Fig. 3 represents a Hadamard gate. A Hadamard gate is one of fundamental gates used in many quantum computers, and is easily implementable.

U in the quantum circuit illustrated in Fig. 3 is an equivalent quantum circuit to a unitary matrix for which an eigenvalue is desired. Black circles and vertical lines illustrated in Fig. 3 are symbols for controlling each U. For example, from out of the quantum circuits illustrated in Fig. 3, when the $2^{nd}$ qubit from the top of connected quantum circuits expressed by the following equation is |1>, this represents that the quantum circuit expressed by the following equation has been operated on the superimposed component thereof.

$$U^{2^0}$$

Moreover, because the next equation (A) is established, the next equation (B) corresponds to applying U twice.

$$U^{2^0} = U^1 = U$$

$$(A)$$

$$U^{2^1} = U^2$$

$$(B)$$

Moreover, QFT$^\dagger$ in Fig. 3 represents a quantum inverse Fourier transformation, which is implementable by a known quantum circuit. Measuring instruments illustrated at the right end of Fig. 3 measure whether each qubit is 0 or 1. The measurement result is a binary expression of an eigenvalue obtained as the computation result.

1. Eigenfrequency Initial State: Preparation Method

When using a quantum phase estimation algorithm, a state close to the eigenstate needs to be prepared as input. However, a method to prepare an appropriate initial state for when computing an eigenfrequency is hitherto unknown.

In order to address this, the classical computer 110 of the hybrid system 100 of the present exemplary embodiment course-grains a model expressing the target system, and sets a solution obtained by computing the course-grained model as the initial state $|\psi>$. Then, the quantum computer 120 of the hybrid system 100 of the present exemplary embodiment uses the initial state $|\psi>$ obtained by the course-grained model to compute the eigenfrequency of the target system. This thereby enables the eigenfrequency of the target system to be computed with good accuracy. Specific description follows while problem setting.

The model expressing the target system is a model including $N = 2^n$ individual particles. In such cases, the classical computer 110 course-grains the model expressing the target system to a system including $M = 2^m$ individual particles (wherein M<N), and classically computes an initial state $|\psi_m>$ of quantum state $|\psi>$. For example, the classical computer 110 collects plural particles present in the model expressing the target system together as a single particle so as to course-grain the model expressing the target system. The course-grained model including M individual particles is a model exactly solvable by the classical computer 110. M is accordingly, for example, appropriately set by a user. Note that the system including N individual particles includes respective positional coordinates for each of the N individual particles, with each of these positional coordinates being set as a variable.

The initial state $|\psi_m>$ is a quantum state corresponding to an exact eigenstate expressible by m individual qubits.

Next, an initial state $|\psi_m>$ expressed by m individual qubits is prepared in the quantum computer 120. For example, an initial state $|\psi_m>$ may be prepared in the quantum computer 120 by a known QROM method (see, for example, reference publication (https://journals.aps.org/prx/abstract/10.1103/PhysRevX.8.041015)).

Next, the quantum computer 120 generates a new state $|\psi_n^{(m)}>$ by adding an n-m individual qubit quantum state, which is a superimposed state equivalent to an n-m individual qubit string, to the initial state $|\psi_m>$, as expressed in the following equation.

$$|\psi_n^{(m)}\rangle := |\psi_m\rangle \otimes \frac{|00\ldots0\rangle + \cdots + |11\ldots1\rangle}{\sqrt{2}^{n-m}}$$

Specifically, a |0> state for all qubits of n-m individual qubits is prepared, and a superimposed state equivalent to an n-m individual qubit string is added to the initial state $|\psi_m\rangle$ by operating a Hadamard gate on each of the respective n-m individual qubits. A state in which a solution to the course-grained model is embedded in the target system is accordingly generated thereby.

For example, in cases in which m = 2 and n = 4, the new state $|\psi_n^{(m)}\rangle$ is expressed by the following equation.

$$\begin{aligned}|\psi_m\rangle = a|00\rangle + b|01\rangle + c|10\rangle + d|11\rangle \;\mapsto\; |\psi_n^{(m)}\rangle = \;& \tfrac{a}{2}(|0000\rangle + |0001\rangle + |0010\rangle + |0011\rangle) \\ + \;& \tfrac{b}{2}(|0100\rangle + |0101\rangle + |0110\rangle + |0111\rangle) \\ + \;& \tfrac{c}{2}(|1000\rangle + |1001\rangle + |1010\rangle + |1011\rangle) \\ + \;& \tfrac{d}{2}(|1100\rangle + |1101\rangle + |1110\rangle + |1111\rangle).\end{aligned}$$

The initial state $|\psi_m\rangle$ obtained in this manner is a state such as a state in which the solution to the course-grained model has been embedded in a more detailed model, and is useful as an initial state. Utilizing the initial state $|\psi_m\rangle$ obtained in this manner accordingly enables an eigenfrequency of the target system to be computed using a quantum computer. Note that, as described later, the initial state preparation method described above is not limited to eigenfrequency computation, and may be utilized in another method. The initial state preparation method described above is applicable to fluid flow computation, electromagnetic field computation, and the like, for example, quantum computation using a finite element method. Details are described later.

2. First Oracle Quantum Circuit $O_F$ and Second Oracle Quantum Circuit $O_H$: Implementation

Implementation of a quantum circuit U as illustrated in Fig. 3 is extremely complicated. The hybrid system 100 of the present exemplary embodiment accordingly uses the first oracle quantum circuit $O_F$ and the second oracle quantum circuit $O_H$ to implement the quantum circuit U in Fig. 3.

Note that implementation of the first oracle quantum circuit $O_F$ and the second oracle quantum circuit $O_H$ is, for example, as disclosed in the following reference publication.

Dominic W. Berry, Andrew M. Childs, "Black-box Hamiltonian simulation and unitary implementation", https://arxiv.org/abs/0910.4157.

Consider a case in which a coefficient matrix of the target system has been embedded in a quantum circuit U (block encoding). In such cases, the first oracle quantum circuit $O_F$ is configured so as to satisfy the following Equation (1) for row numbers x = 1, ..., N of the coefficient matrix H and non-zero components i = 1, ..., d. This means that the first oracle quantum circuit $O_F$ is a quantum circuit for outputting positions x, $y_i$ in the coefficient matrix of the non-zero components in the coefficient matrix H.

$$O_F\,|x, i\rangle = |x, y_i\rangle$$

Equation (1)

In Equation (1), $y_i$ represents a column number where there is an $i^{th}$ non-zero component present in the $x^{th}$ row of the coefficient matrix H, and |x, i> represents the qubit state. |x, i> holds a binary expression of x and i. For example, when x = 2 and i = 1, |x, i> = |1001>. In such cases the foremost two digits represent x, and the next two digits represent i.

The second oracle quantum circuit $O_H$ is configured so as to satisfy the following Equation (2). |x, y>|z in following Equation (2) represents a complex system between a qubit representing x, y and a qubit representing z. Moreover, row number x of the coefficient matrix H and column number y of the coefficient matrix H are x, y = 1, ..., N, z is binary, and $H_{xy}$ is an x row y column component of the coefficient matrix H expressed in binary. This means that when position x, y is specified in the coefficient matrix H, the second oracle quantum circuit $O_H$ is a quantum circuit to output component value $H_{xy}$ present at this position.

$$O_H \left| x, y \right\rangle \left| z \right\rangle = \left| x, y \right\rangle \left| z \oplus H_{xy} \right\rangle$$

Equation (2)

The following symbol in Equation (2) represents an XOR operation for each qubit:

$\oplus$

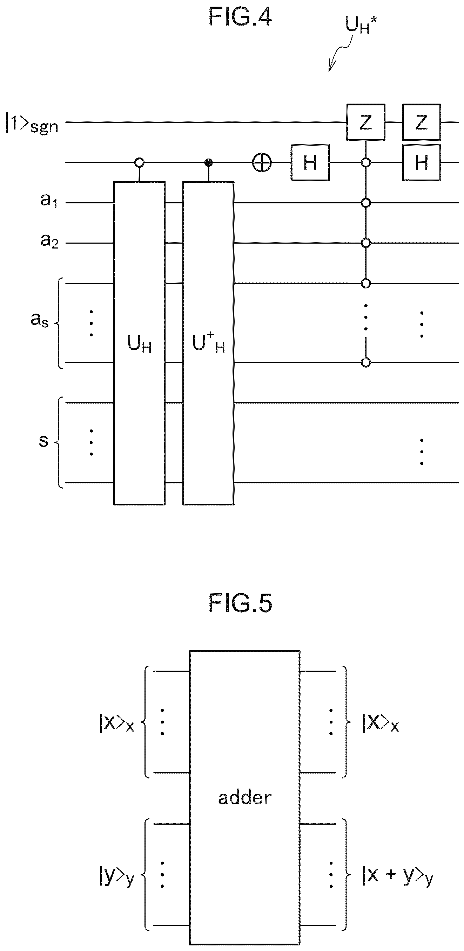

Fig. 4 is a quantum circuit $U_H{}^*$ incorporated in U in the quantum circuit of Fig. 3. Specifically, quantum circuit $U_H{}^*$ illustrated in Fig. 4 corresponds to U in the quantum circuit of Fig. 3. Description follows regarding implementation of first oracle quantum circuit $O_F$ and second oracle quantum circuit $O_H$ for cases in which quantum phase estimation is executed using the quantum circuit $U_H{}^*$ illustrated in Fig. 4. $\left| 1 \right\rangle_{sgn}$, $a_1$, $a_2$ illustrated in Fig. 4 represent a single auxiliary qubit, $a_s$, s represent a qubit cluster holding respective input/outputs, and quantum circuit $U_H$, $U_H{}^\dagger$ are configured including the first oracle quantum circuit $O_F$ and the second oracle quantum circuit $O_H$.

The quantum circuit $U_H{}^*$ illustrated in Fig. 4 is implementable by utilizing a method called qubitization and, for example, is implementable by reference to the following reference publication. It is known that there are cases in which a quantum circuit can be simplified by executing quantum phase estimation utilizing the quantum circuit $U_H{}^*$ illustrated in Fig. 4.

D. W. Berry and A. M. Childs, "Black-box Hamiltonian simulation and unitary implementation", Quantum Info. Comput. 12 (2012) 29-62, arXiv:0910.4157 [quant-ph].

Consider a case in which the coefficient matrix H is a 2 sparse matrix. Note that a 2 sparse matrix is a matrix such that there are two non-zero components present in each row, and the remaining components are zero. Furthermore, each component $H_{x\,y}$ of the coefficient matrix H is expressed by the following equation.

$$H_{xy} \begin{cases} \neq 0 & (|x - y| = 1 \bmod 2^n) \\ = 0 & (\text{otherwise}) \end{cases}$$

In such cases, the coefficient matrix H is a matrix such illustrated below.

$$H = \begin{pmatrix} 0 & \bullet & 0 & \cdots & 0 & \bullet \\ \bullet & 0 & \bullet & 0 & \cdots & 0 \\ 0 & \bullet & 0 & & & \vdots \\ \vdots & & & \ddots & & 0 \\ 0 & & & & 0 & \bullet \\ \bullet & 0 & \cdots & 0 & \bullet & 0 \end{pmatrix}$$

Note that a fundamental element when implementing the first oracle quantum circuit $O_F$ and the second oracle quantum circuit $O_H$ is an adder. An adder illustrated in Fig. 5 may, for example, be configured with reference to the following reference publication.

S. A. Cuccaro, T. G. Draper, S. A. Kutin, and D. P. Moulton, "A new quantum ripplecarry addition circuit", arXiv:quant-ph/0410184.

In the present exemplary embodiment, the first oracle quantum circuit $O_F$ and the second oracle quantum circuit $O_H$ are implemented by an adder.

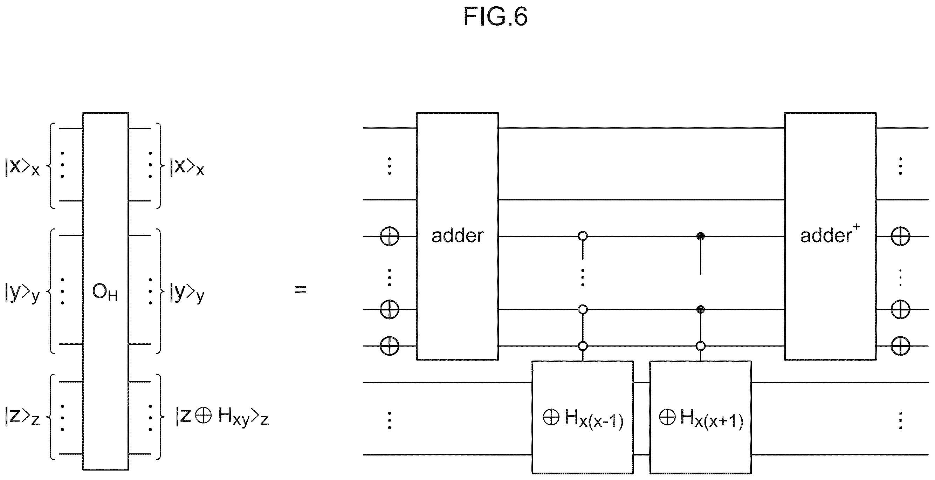

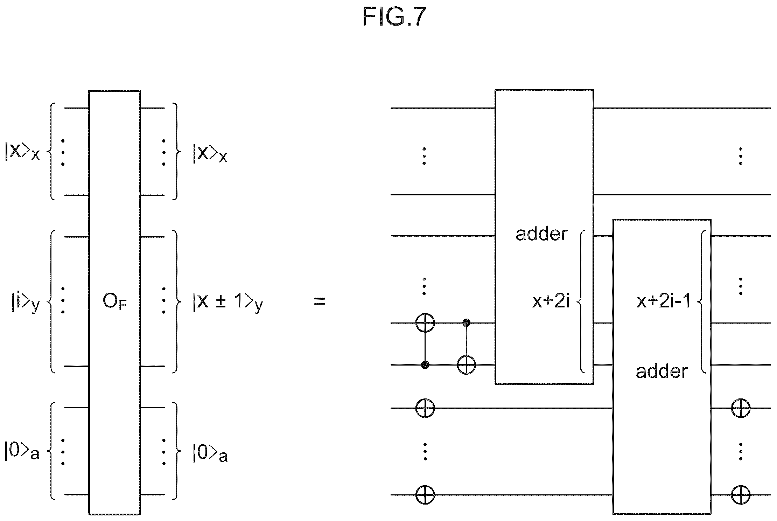

In such cases, the first oracle quantum circuit $O_F$ is a quantum circuit such as illustrated in Fig. 6. $H_{x(x+1)}$ illustrated in Fig. 6 is a component of an x row x + 1 column of the coefficient matrix H as expressed in binary. On the other hand, the second oracle quantum circuit $O_H$ is a quantum circuit such as illustrated in Fig. 7. In Fig. 6 and Fig. 7, adder and adder$^\dagger$ express an adder and an inverse operation thereto ($\dagger$ represents an inverse operation).

In this manner, an eigenfrequency of the target system can be computed using a quantum computer by incorporating the first oracle quantum circuit $O_F$ and the second oracle quantum circuit $O_H$ into a quantum circuit for executing quantum phase estimation. Specifically, the quantum circuit for executing quantum phase estimation can be simplified by incorporating the first oracle quantum circuit $O_F$ and the second oracle quantum circuit $O_H$ into the quantum circuit for executing quantum phase estimation, enabling quantum phase estimation to be executed efficiently. This thereby enables an eigenfrequency to be computed using quantum phase estimation without executing a complicated quantum circuit. More specifically, a diagonalization target coefficient matrix H can be embedded in a quantum circuit U easily by using the first oracle quantum circuit $O_F$ and the second oracle quantum circuit $O_H$, enabling simplification of the quantum circuit for executing quantum phase estimation.

3. First Oracle Quantum Circuit $O_F$ and Modified Second Oracle Quantum Circuit $O_H{}^{mod}$: Implementation

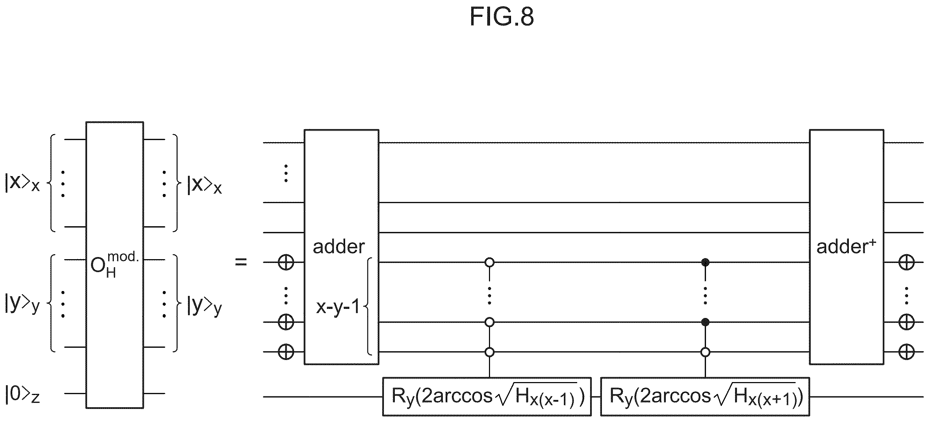

Not all of the functions of a second oracle quantum circuit $O_H$ are needed in order to actually execute quantum phase estimation. The second oracle quantum circuit $O_H$ employs an angle computed based on the values of each component $H_{xy}$ of the coefficient matrix H, and is only utilized to perform a gate operation called Controlled-Ry rotation.
The second oracle quantum circuit $O_H$ is accordingly modified in the present exemplary embodiment. Fig. 8 is a diagram illustrating an example of a modified second oracle quantum circuit $O_H$. As illustrated in Fig. 8, a rotation gate corresponding to each component of the coefficient matrix H is incorporated as an element in the modified second oracle quantum circuit $O_H$. Specifically, the following two gates are included in the modified second oracle quantum circuit $O_H$. $R_y$ represents a rotation gate.

$$R_y\left(2 \arccos \sqrt{H_{x(x-1)}}\right)$$

$$R_y\left(2 \arccos \sqrt{H_{x(x+1)}}\right)$$

These gates differ from the gates of Fig. 6 onwards in that there is no need for various computations related to values of each component $H_{xy}$ of the coefficient matrix H, enabling quantum phase estimation to be executed efficiently.

$$\oplus H_{x(x-1)}$$

$$\oplus H_{x(x+1)}$$

The above gate operations are contained in the modified second oracle quantum circuit $O_H$. This means that by pre-computing angles computed based on values of each component $H_{xy}$ of the coefficient matrix H in cases in which there are few types of value, such as, for example, a case in which all non-zero components from out of the coefficient matrix H are 1, there is no need for computation of such angles on a quantum computer. Not needing to execute unnecessary processing enables efficient execution of quantum phase estimation.
Although the above exemplary embodiment has been described for a 2 sparse matrix, there is no limitation thereto. For example, similar processing to that described above may be executed for a d-sparse matrix in which there are d individual non-zero components present in each row.
Moreover, a rotation gate corresponding to each component of the coefficient matrix H is contained as an element in the modified second oracle quantum circuit $O_H$. A method of computing and saving each angle according to each component of the coefficient matrix H is accordingly applicable to various algorithms.

4. Implementation of Quantum Circuit Considering Iterative Structure in Target System

Consider a case of a system in which the target system has an iterative structure. In the present exemplary embodiment, the first oracle quantum circuit $O_F$ and the second oracle quantum circuit $O_H$ are implemented in consideration of an iterative structure of the target system.
Consider here a case in which there are L individual unit structures configuring an iterative structure, a single unit structure includes K individual particles, and the target system is a system including $K \times L = N$ individual particles.
In such cases, the first oracle quantum circuit $O_F$ is expressed by the following Equation (1A), which is a first oracle quantum circuit $O_F{}^{full}$ for the entire target system. In the following Equation (1A), i is an identifying number to identify a spring inside an $l^{th}$ unit structure, and is an identifying number representing a spring connecting an $x^{th}$ particle in the $l^{th}$ unit

structure and a $y_i^{th}$ particle in the $l + \Delta l_i^{th}$ unit structure. Moreover, $\Delta l_i$ is a value that may be any of -1, 0, or +1. Note that in cases in which the unit structure configuring the iterative structure is iterative in a two-dimensional plane or the like, $\Delta l_i$ may take more types of value.

$$O_F^{\text{full}} \left|x, i\right\rangle \left|0\right\rangle \left|l, 0\right\rangle = \left|x, y_i\right\rangle \left|\Delta l_i\right\rangle \left|l, l + \Delta l_i\right\rangle$$

Equation (1A)

Moreover, the above second oracle quantum circuit $O_H$ is a second oracle quantum circuit $O_H^{\text{full}}$ for the entire target system, and is expressed by the following Equation (2A). $H_{\Delta l \neq 0, xy}$ in following Equation (2A) represents components of the coefficient matrix H at connection locations between different unit structures, and $H_{-1, xy} = -H_{+1, yx}$.

$$O_H^{\text{full}} \left|x, y\right\rangle \left|\Delta l\right\rangle \left|z\right\rangle \left|l, l + \Delta l\right\rangle = \left|x, y\right\rangle \left|\Delta l\right\rangle \left|z \oplus H_{\Delta l, xy}\right\rangle \left|l, l + \Delta l\right\rangle$$

Equation (2A)

In such cases, the first oracle quantum circuit $O_F^{\text{sub}}$ of the unit structure is expressed by the following Equation (3A). Moreover, the second oracle quantum circuit $O_H^{\text{sub}}$ of the unit structure is expressed by the following Equation (4A).

$$O_F^{\text{sub}} \left|x, i\right\rangle \left|0\right\rangle = \left|x, y_i\right\rangle \left|\Delta l_i\right\rangle$$

Equation (3A)

$$O_H^{\text{sub}} \left|x, y\right\rangle \left|\Delta l\right\rangle \left|z\right\rangle = \left|x, y\right\rangle \left|\Delta l\right\rangle \left|z \oplus H_{\Delta l, xy}\right\rangle$$

Equation (4A)

Note the first oracle quantum circuit $O_F^{\text{full}}$ for the entire system is implementable by combining the first oracle quantum circuit $O_F^{\text{sub}}$ of the unit structure and the following add operation. Moreover, the second oracle quantum circuit $O_H^{\text{full}}$ for the entire system is the second oracle quantum circuit $O_H^{\text{sub}}$ of the unit structure, as is.

Moreover, combining the identifying number 1 for identifying the unit structure with the identifying number x for identifying a particle in a single unit structure enables a number X particle of interest in the entire structure to be expressed by the following.

$$X = l \times 2^K + x$$

Utilizing the above equation enables l and x to be considered separately in the following manner.

$$\left|X\right\rangle = \left|l\right\rangle \left|x\right\rangle$$

The following Equations are established in consideration of the above.

$$O_F^{\text{full}} \left|x, i\right\rangle \left|0\right\rangle \left|l, 0\right\rangle \rightarrow O_F^{\text{full}} \left|l, x, 0, i\right\rangle \left|0\right\rangle = O_H^{\text{full}} \left|X, 0, i\right\rangle \left|0\right\rangle$$

$$O_H^{\text{full}} \left|X, 0, i\right\rangle \left|0\right\rangle = \left|l, x, l + \Delta l_i, y_i\right\rangle \left|0\right\rangle = \left|X, Y_i\right\rangle \left|0\right\rangle$$

$$Y_i = (l + \Delta l_i) \times 2^K + y_i$$

As is apparent from the above equations, the first oracle quantum circuit $O_F^{full}$ for the entire system operates similarly to a normal first oracle quantum circuit $O_F$. Moreover, similar applies to the second oracle quantum circuit $O_H^{full}$ for the entire system and the normal second oracle quantum circuit $O_H$.

As described above, as long as the first oracle quantum circuit $O_F^{sub}$ of a unit structure and the second oracle quantum circuit $O_H^{sub}$ of a unit structure can be built, based thereon, the first oracle quantum circuit $O_F^{full}$ for the entire system and the second oracle quantum circuit $O_H^{full}$ for the entire system can be built.

Note that although in the present exemplary embodiment description has been given of an example of a case in which a size of matrix for particle number N is N × N, the matrix size is 3N × 3N when, for example, the particles are able to move in 3 directions of x, y, z. In such cases, by taking label x of the particle as coordinate label (x = 1, ..., 3N), application can be made to each of the above terms.

Exemplary Embodiment Hybrid System 100: Operation

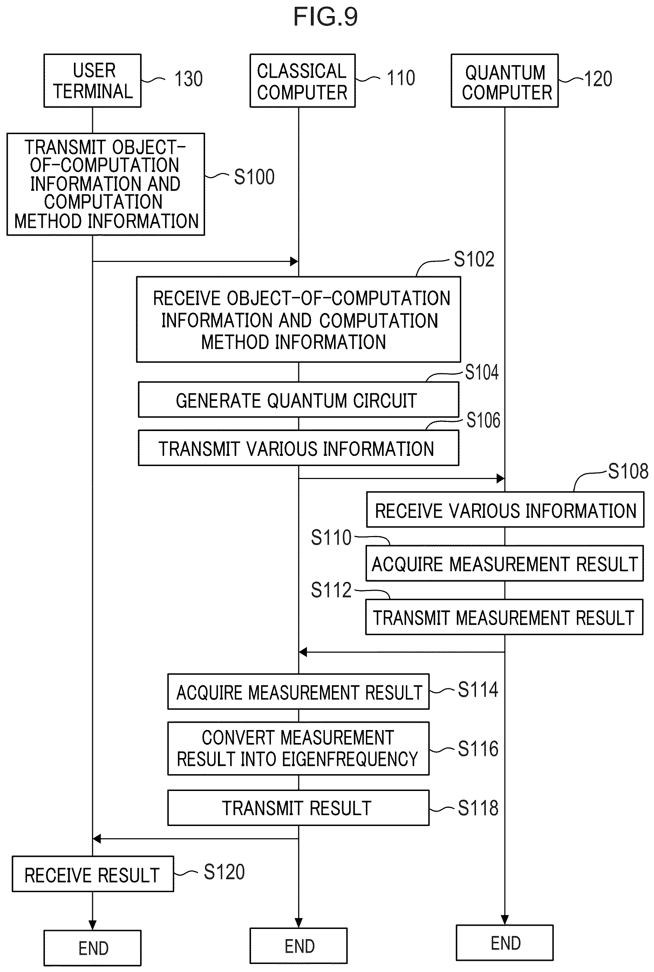

Next, explanation follows regarding specific operation of the hybrid system 100 of the exemplary embodiment. The respective devices configuring the hybrid system 100 execute the various processing illustrated in Fig. 9.

First, at step S100, the user terminal 130 transmits, to the classical computer 110, object-of-computation information that is information relating to an object-of-computation input by a user and computation method information that is information related to the computation method.

The object-of-computation information includes, for example, information related to the target system (for example, information related to the coefficient matrix H when an equation of motion of the target system is expressed in matrix format) and quantum computer information (for example, type of quantum computer for utilization by a user or type of pseudo quantum computer) and the like.

The computation method information includes, for example, information related to a quantum phase estimation algorithm. The information related to the quantum phase estimation algorithm includes, for example, a state preparation quantum circuit that is a quantum circuit for executing a quantum phase estimation algorithm, an initial state, various oracle quantum circuits (for example, $O_F$, $O_H$, $O_H^{mod}$, $O_F^{sub}$, $O_F^{full}$, $O_H^{sub}$, and $O_H^{full}$), execution time number, and various other parameters (for example, number of digits etc. of eigenvalue to be found).

Next, at step S102, the classical computer 110 receives the object-of-computation information and computation method information transmitted from the user terminal 130.

At step S104, the classical computer 110 uses a method such as described above to generate a quantum circuit for executing quantum phase estimation based on information related to the coefficient matrix H when the equation of motion of the target system is expressed in a matrix format, and based on a quantum state | ψ> corresponding to an eigenstate of the target system.

For example, the classical computer 110 classically computes an initial state | $ψ_m$> of the quantum state | ψ> by course-graining a model expressing the target system to a system including M = $2^m$ individual particles (wherein M < N). The classical computer 110 sets this initial state | $ψ_m$> of the quantum state | ψ> as the quantum state | ψ> of the quantum circuit for executing quantum phase estimation.

Moreover, for example, the classical computer 110 generates the quantum circuit for executing quantum phase estimation by incorporating the first oracle quantum circuit $O_F$ illustrated in Fig. 6 and the second oracle quantum circuit $O_H$ illustrated in Fig. 7 in the state preparation quantum circuit.

Moreover, for example, the classical computer 110 generates the quantum circuit for executing quantum phase estimation by incorporating the first oracle quantum circuit $O_F$ illustrated in Fig. 6 and the second oracle quantum circuit $O_H^{mod}$ illustrated in Fig. 8 in the state preparation quantum circuit.

Moreover, for example, the classical computer 110 generates the quantum circuit for executing quantum phase estimation by incorporating the first oracle quantum circuit $O_F^{full}$ for the entire target system, the second oracle quantum circuit $O_H^{full}$ for the entire target system, the first oracle quantum circuit $O_F^{sub}$ of the unit structure, and the second oracle quantum circuit $O_H^{sub}$ of the unit structure in the state preparation quantum circuit.

Note that generation of the quantum circuit for executing quantum phase estimation may adopt one of the methods described above, and may be a combination of the above methods.

At step S106, the classical computer 110 transmits various information needed for quantum computation to the quantum computer 120. Specifically, the classical computer 110 transmits the quantum circuit for estimating quantum phase estimation generated at step S104 to the quantum computer 120.

At step S108, the control device 121 of the quantum computer 120 receives the various information transmitted from the classical computer 110 at step S104.

At step S110, the control device 121 of the quantum computer 120 executes quantum computation in the quantum computer 120 according to the various information received at step S108. Specifically, the quantum computer 120 acquires a measurement result of eigenvalue of the coefficient matrix H by executing the quantum circuit structure for estimating quantum phase estimation generated at step S104.

Specifically, according to control of the control device 121, the quantum computer 120 generates an electromagnetic wave for irradiating onto at least one qubit out of the qubit cluster 123. The quantum computer 120 then executes a quantum circuit by irradiating the at least one qubit out of the qubit cluster 123 with the generated electromagnetic wave. Gate operations of quantum gates in the quantum circuit are converted into corresponding electromagnetic waveforms, and the generated electromagnetic wave is irradiated onto the qubit cluster 123 by the electromagnetic wave generation device 122. The quantum computer 120 then outputs the results of quantum measurement.

At step S112, the control device 121 transmits the measurement result obtained at step S110 to the classical computer 110.

At step S114, the classical computer 110 receives the measurement result transmitted from the control device 121 at step S112.

At step S116, the classical computer 110 performs appropriate processing and the like on the measurement result obtained at step S114 to compute the eigenfrequency of the target system. Specifically, because the value of the eigenvalue output from the quantum circuit is binary, the classical computer 110 performs binary to base ten conversion etc. so as to acquire a base ten eigenvalue. This eigenvalue is equivalent to the eigenfrequency. Moreover, for example, in cases in which plural measurement results have been obtained by execution of the quantum circuit plural times, the classical computer 110 computes the eigenfrequency of the target system such as by majority vote of the measurement results for plural times.

At step S118, the classical computer 110 transmits the computation results obtained at step S116 to the user terminal 130.

At step S120, the user terminal 130 receives the results transmitted from the classical computer 110.

A user checks results displayed on a display unit (omitted in the drawings) of the user terminal 130.

As described above, the classical computer of the hybrid system of the exemplary embodiment transmits, to the quantum computer, information related to a coefficient matrix when the equation of motion of the target system is expressed in matrix format, and a quantum circuit for input of a quantum state $|\psi\rangle$ corresponding to the eigenstate of the target system, which is a quantum circuit for executing quantum phase estimation. The quantum computer acquires the measurement result of the eigenvalue of the coefficient matrix by executing this quantum circuit, and transmits the eigenvalue measurement result to the classical computer. The classical computer computes the eigenfrequency of the target system based on the eigenvalue measurement result. This thereby enables computation of the eigenfrequency of the target system using a quantum phase estimation algorithm.

Technology for computation of the eigenfrequency using a quantum phase estimation algorithm has not been known hitherto. In contrast thereto, the present exemplary embodiment is able to compute the eigenfrequency of the target system using a quantum phase estimation algorithm by the classical computer 110 incorporating the first oracle quantum circuit $O_F$ and the second oracle quantum circuit $O_H$ into the quantum circuit for executing quantum phase estimation.

More specifically, the quantum circuit for executing quantum phase estimation can be simplified by the classical computer 110 incorporating the first oracle quantum circuit $O_F$ and the second oracle quantum circuit $O_H$ into the quantum circuit for executing quantum phase estimation. This enables quantum phase estimation to be executed efficiently. The quantum computer 120 is thereby able to compute the eigenfrequency using quantum phase estimation without executing a complicated quantum circuit. More specifically, by employing the first oracle quantum circuit $O_F$ and the second oracle quantum circuit $O_H$, a diagonalization target coefficient matrix H can be easily embedded in the quantum circuit U, enabling simplification of the quantum circuit for executing quantum phase estimation.

Moreover, in the present exemplary embodiment, the classical computer 110 is able to reduce gate operation by incorporating the second oracle quantum circuit $O_H^{mod}$ resulting from modifying the second oracle quantum circuit $O_H$ into the quantum circuit for executing quantum phase estimation, enabling the quantum phase estimation algorithm to be executed even more efficiently. Specifically, from out of the functions of the second oracle quantum circuit $O_H$, gate operation can be reduced by removing functions not essentially needed for quantum phase estimation, enabling a quantum phase estimation algorithm to be executed more efficiently.

Moreover, the present exemplary embodiment enables the eigenfrequency to be computed with good precision by classically computing the initial state $|\psi_m\rangle$ of the quantum state $|\psi\rangle$ by course-graining a model of the target system, and by executing a quantum circuit after an embedded state of a solution to the course-grained model in the target system has been generated. For example, computation results can be obtained with better accuracy by setting the result obtained by course-graining as the initial state than in cases in which the initial state is set randomly. Note that the method of classical computing the initial state $|\psi_m\rangle$ of the quantum state $|\psi\rangle$ by course-graining a model representing the target system may be utilized in another quantum algorithm such as a Harrow-Hassidim-Lloyd (HHL) algorithm or the like.

For example, the classical computer 110 may classically compute the initial state $|\psi_m\rangle$ of the quantum state $|\psi\rangle$ by course-graining a model representing the target system. Then, based on the initial state $|\psi_m\rangle$, the classical computer

110 generates a quantum circuit for executing the target computation. The quantum computer 120 generates an embedded state of the solution to the course-grained model in the target system, and executes the quantum circuit based on this state. This thereby enables an appropriate initial state $|\psi_m\rangle$ to be prepared and enables computation results with better accuracy, even for a different quantum algorithm to eigenfrequency computation by quantum phase estimation.

Moreover, when the target system is a system having an iterative structure, the present exemplary embodiment is configured so as to be able to compute the eigenfrequency of the system having an iterative structure by incorporating the first oracle quantum circuit $O_F^{full}$ for the entire target system, the second oracle quantum circuit $O_H^{full}$ for the entire target system, the first oracle quantum circuit $O_F^{sub}$ of the unit structure, and the second oracle quantum circuit $O_H^{sub}$ of the unit structure, into the quantum circuit for executing quantum phase estimation. For example, computation of the eigenfrequency using a quantum computer is enabled for a target having an iterative structure, such as a building, bridge, polymer, or the like. Note that a proposal in the present exemplary embodiment for cases in which the target system is a system having an iterative structure is not limited to computation of the eigenfrequency, and is also applicable to another computation. For example, application can be made to a fluid flow computation. Moreover, the proposal in the present exemplary embodiment for cases in which the target system is a system having an iterative structure is not limited to quantum phase estimation, and is applicable to any algorithm such as an algorithm utilizing oracle quantum circuits $O_F$, $O_H$.

For example, when the target system is a system having an iterative structure, the classical computer 110 is able to perform various computations of the system having an iterative structure by incorporating the first oracle quantum circuit $O_F^{full}$ for the entire target system, the second oracle quantum circuit $O_H^{full}$ for the entire target system, the first oracle quantum circuit $O_F^{sub}$ of a unit structure, and the second oracle quantum circuit $O_H^{sub}$ of a unit structure into a quantum circuit. For example, when the target is a polymer, a configuration may be adopted in which a unit structure and particles are determined based on the molecular structure of the polymer and then, after finding a coefficient matrix H such as from the absorption spectrum of the polymer and the like, the eigenfrequency of the polymer is computed by the method described above.

Note that although in the present exemplary embodiment an example has been described of a case in which a system including N individual particles is the target, and including the positional coordinates of each of the N individual particles as variables, in cases in which another computation is executed, such as computation of fluid flow, the variables may be set according to the fluid flow computation or the like.

Example 1

Next, description follows regarding Examples corresponding to the present exemplary embodiment. Example 1 is computation of an eigenfrequency of the following equation of motion. Note that k represents a spring constant, and m represents mass. Note that $H_{xy}$ below is a result of dividing each component of a coefficient matrix by k.

$$m\ddot{x}_i = k(x_{i+1} - x_i) - k(x_i - x_{i-1})$$

$$H_{xy} = \begin{cases} 1 & (|x-y| = 1), \\ -2 & (|x-y| = 0), \\ 0 & (\text{otherwise}). \end{cases}$$

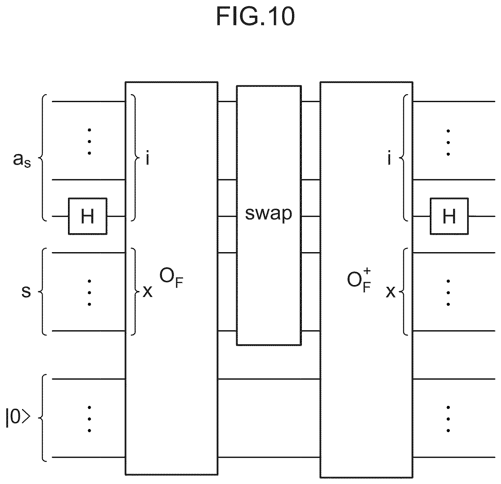

A first oracle quantum circuit $O_F$ set when computing the eigenfrequency of the above system is equivalent to the quantum circuit of Fig. 7. Fig. 10 is a diagram illustrating an example of a quantum circuit incorporating the first oracle quantum circuit $O_F$.

Example 2

In Example 2, the eigenfrequency of the following equation of motion is computed. Note that $k_1$ and $k_2$ represent spring constants, and m represents mass. $k_1 < k_2$.

$$m\ddot{x}_i = \begin{cases} k_1(x_{i+1} - x_i) - k_2(x_i - x_{i-1}) & (i \text{ even}), \\ k_2(x_{i+1} - x_i) - k_1(x_i - x_{i-1}) & (i \text{ odd}). \end{cases}$$

$$H_{xy} = \begin{cases} k_1 & (\text{``}x \text{ even and } x - y = +1\text{''} \text{ or ``}x \text{ odd and } x - y = -1\text{''}) \\ -(k_1 + k_2) & (x - y = 0) \\ k_2 & (\text{``}x \text{ odd and } x - y = +1\text{''} \text{ or ``}x \text{ even and } x - y = -1\text{''}) \\ 0 & (\text{otherwise}) \end{cases}$$

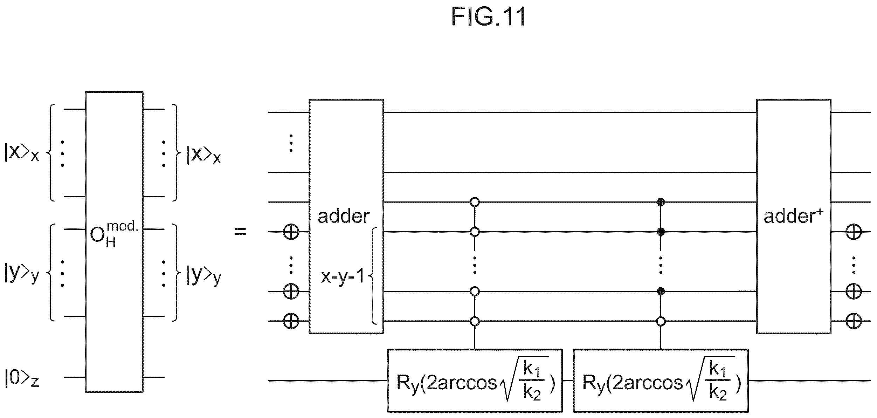

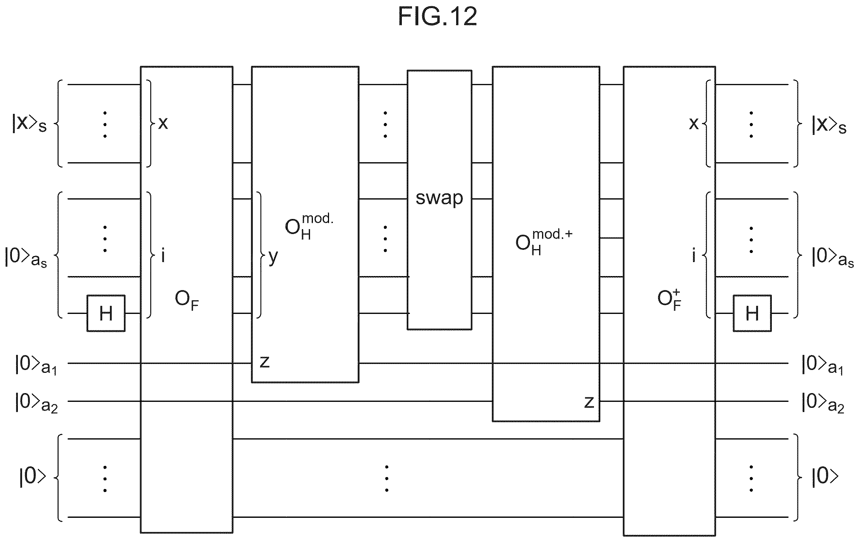

Fig. 11 is a diagram illustrating an example of a modified second oracle quantum circuit $O_H{}^{mod}$ set when computing the eigenfrequency of the above system. Moreover, Fig. 12 is a diagram illustrating an example of a quantum circuit incorporating a first oracle quantum circuit $O_F$ and a modified second oracle quantum circuit $O_H{}^{mod.}$

Example 3

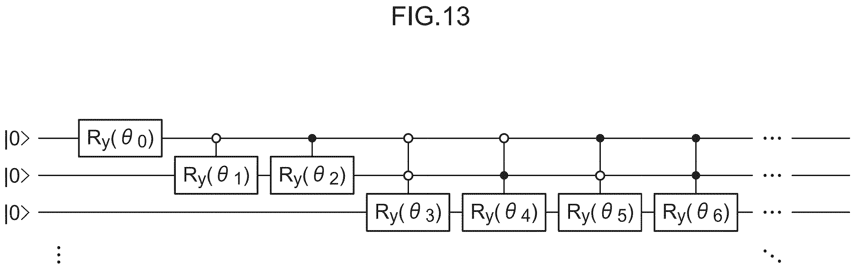

Example 3 is a simulation test of computing the eigenfrequency of an equation of motion using Example 2. Specifically, Example 3 verifies the accuracy of a method of setting an initial state by course-graining the target system.
An initial state $| \psi_m \rangle$ is set by classically computing each value of the following equation. Note that a quantum circuit such as that illustrated in Fig. 13 is configured when implementing this computation by quantum circuit.

$$|\psi_m\rangle = \sum_{i=0}^{2^m - 1} a_i |i\rangle \quad (a_i \in \mathbb{R})$$

$$\theta_0 = 2 \arccos \sqrt{\frac{a_0^2 + a_1^2 + \cdots + a_{2^{m-1}-1}^2}{a_0^2 + a_1^2 + \cdots + a_{2^m-1}^2}},$$

$$\theta_1 = 2 \arccos \sqrt{\frac{a_0^2 + a_1^2 + \cdots + a_{2^{m-2}-1}^2}{a_0^2 + a_1^2 + \cdots + a_{2^{m-1}-1}^2}},$$

$$\theta_2 = 2 \arccos \sqrt{\frac{a_{2^{m-2}}^2 + a_{2^{m-2}+1}^2 + \cdots + a_{2^{m-1}-1}^2}{a_0^2 + a_1^2 + \cdots + a_{2^{m-1}-1}^2}},$$

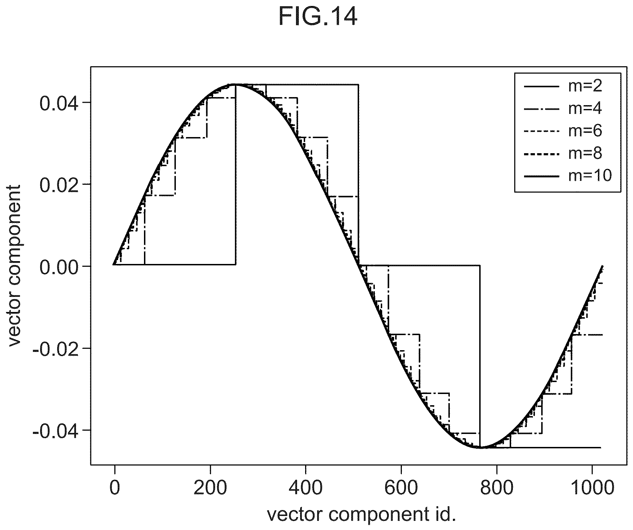

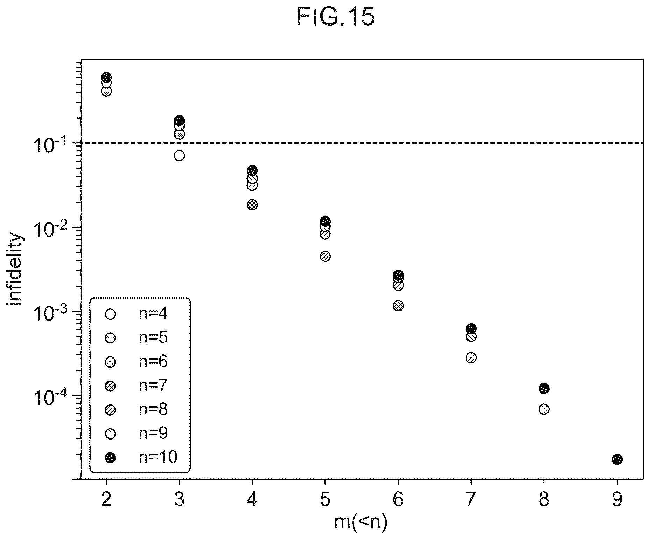

Fig. 14 and Fig. 15 are diagrams representing simulation results. Fig. 14 illustrates states that can be prepared when m is changed for n = 10, and a situation is apparent of accuracy improving as m is increased. The accuracy of prepared states (infidelity, namely, size of errors) is investigated by combining various m and n as illustrated in Fig. 15, and an error of not more 0.1 is perceivably sufficiently small even for small m = about 4.
Note that the technology disclosed herein is not limited to the exemplary embodiments and Examples described above, and various modifications and applications are possible within a range not departing from the spirit of the present disclosure.
For example, in the exemplary embodiment described above, information may be exchanged in any manner between the classical computer 110 and the quantum computer 120. For example, the exchange of quantum circuit parameters, the exchange of measurement results, and the like between the classical computer 110 and the quantum computer 120 may be performed by successive exchanges performed each time a specific computation is completed, or may be performed by exchange after all computations have been completed.
Moreover, in the exemplary embodiment described above, explanation has been given regarding an example in which object-of-computation information is transmitted from the user terminal 130 to the classical computer 110, and the classical computer 110 executes computations according to the object-of-computation information. However, there is no limitation thereto. The user terminal 130 may transmit the object-of-computation information over a computer network such as an IP network to the classical computer 110 or to a storage medium or storage device accessible to the classical computer 110. Alternatively, the object-of-computation information may be stored on a storage medium or storage device and then passed to the administrator of the classical computer 110 for the administrator to input the object-of-computation information to the classical computer 110 using the storage medium or storage device.

In the exemplary embodiment described above, explanation has been given regarding an example of a case in which the quantum circuit is executed by irradiating an electromagnetic wave. However, there is no limitation thereto, and quantum circuit may be executed using a different method.

Although explanation has been given regarding an example of a case in which the quantum computer 120 executes the computation in the exemplary embodiment described above, there is no limitation thereto. For example, computations may be executed by a classical computer that imitates the behavior of a quantum computer.

Although the exemplary embodiment described above assumes that the classical computer 110 and the quantum computer 120 are administered by separate organizations, the classical computer 110 and the quantum computer 120 may be administered as one by the same organization. In such cases, there is no longer a need to transmit quantum chemical computation information from the classical computer 110 to the quantum computer 120, or to transmit a measurement result from the quantum computer 120 to the classical computer 110. Moreover, in such cases the role of the classical computer 110 in the foregoing explanation may be thought of as being performed by the control device 121 of the quantum computer 120.

Note that when a quantum computer present substitutable for part or all of the processing of the classical computer as described in the present exemplary embodiment is present, a configuration may be adopted in which such a part or all of the processing is performed by the quantum computer.

Note that in the foregoing exemplary embodiments described in the present specification, unless the word "solely" is used, as in "based solely on xx", "according solely to xx", or "solely in the case of xx", the present specification should be taken as considering also other additional information that may be anticipated. For example, wording such as "in the case of a, then b" should not be taken as meaning "b is always be true in the case of a", unless clearly stated as such.

Note that although the foregoing exemplary embodiments employs expressions such as "optimize" and "optimized parameters", expressions relating to "optimization" should be taken as referring to approaching an optimal state. Accordingly, when attempting to obtain parameters so as to minimize a given function, the parameters obtained from optimizing the function are to be understood to not only be the parameters so as to achieve a global solution so as to minimize the function but also to include cases of a local solution thereto.

Moreover, even if there is an aspect in which an operation different to the operations described in the present specification is performed in a method, program, terminal, device, server, or system (hereafter "method or the like"), each of the embodiments of the technology disclosed herein concern operations the same as one of the operations described in the present specification, and the presence of an operation different to the one of the operations described in the present specification does not cause the method or the like to fall outside the scope of the embodiments of the technology disclosed herein.

Although explanation has been given in the present specification regarding exemplary embodiments in which a program is pre-installed, such a program may be provided stored on a computer-readable recording medium.

The configuration elements of the hybrid system of the present exemplary embodiment are not limited to implementation by a single computer or server, and they may be implemented distributed between plural computers connected together over a network.

For example, the processing executed by the classical computer in the respective exemplary embodiments described above may be configured as processing distributed between and performed by plural classical computers connected over a network. Alternatively, for example, the processing executed by the quantum computer in the respective exemplary embodiments described above may be configured by processing distributed between plural quantum computers connected over a network. In such cases the hybrid system is configured by at least one or more classical computer and by at least one or more quantum computer.

All publications, patent applications and technical standards mentioned in the present specification are incorporated by reference in the present specification to the same extent as if each individual publication, patent application, or technical standard was specifically and individually indicated to be incorporated by reference.

Supplements

The following supplements relate to embodiments of the present disclosure.

Supplement 1

A quantum information processing method for execution by a classical computer in a hybrid system including the classical computer and a quantum computer, the quantum information processing method including:

the classical computer transmitting, to the quantum computer, information related to a coefficient matrix when an equation of motion of a target system is expressed in a matrix format, and a quantum circuit that was generated based on a quantum state $|\psi\rangle$ corresponding to an eigenstate of the target system and that is a quantum circuit for executing quantum phase estimation;

the quantum computer acquiring a measurement result of an eigenvalue of the coefficient matrix by executing the quantum circuit and transmitting the eigenvalue measurement result to the classical computer; and

the classical computer computing an eigenfrequency of the target system based on the eigenvalue measurement result.

Supplement 2

The quantum information processing method of Supplement 1, wherein:

the quantum circuit for executing the quantum phase estimation is configured including

a first oracle quantum circuit $O_F$ for outputting a position in the coefficient matrix of a non-zero component of the coefficient matrix, and

a second oracle quantum circuit $O_H$ for outputting a component value present at the position when the position has been specified in the coefficient matrix; and

the quantum circuit for executing the quantum phase estimation is a quantum circuit embedded with the coefficient matrix by incorporating the first oracle quantum circuit $O_F$ and the second oracle quantum circuit $O_H$.

Supplement 3

The quantum information processing method of Supplement 1, wherein:

the quantum circuit for executing the quantum phase estimation is configured including,

a first oracle quantum circuit $O_F$ for outputting a position in the coefficient matrix of a non-zero component of the coefficient matrix, and

a modified second oracle quantum circuit $O_H^{mod}$ including as elements rotation gates corresponding to each component in the coefficient matrix; and

the quantum circuit for executing the quantum phase estimation is a quantum circuit embedded with the coefficient matrix by incorporating the first oracle quantum circuit $O_F$ and the modified second oracle quantum circuit $O_H^{mod.}$

Supplement 4

The quantum information processing method of any one of Supplement 1 to Supplement 3, wherein:

a model expressing the target system includes $N = 2^n$ individual variables;
the classical computer

classically computes an initial state $|\psi_m\rangle$ of the quantum state $|\psi\rangle$ by course-graining the model expressing the target system to a system including $M = 2^m$ individual variables (wherein $M < N$), and

generates the quantum circuit for executing the quantum phase estimation based on the initial state $|\psi_m\rangle$ of the quantum state $|\psi\rangle$; and

the quantum computer
acquires a measurement result of an eigenvalue of the coefficient matrix by executing the quantum circuit in a state generated with a solution to the course-grained model embedded in the target system by adding a quantum state that includes n-m individual qubits and that is a superimposed state of an n-m individual qubit string to the initial state $|\psi_m\rangle$

of the quantum state $|\psi\rangle$.

Supplement 5

The quantum information processing method of Supplement 2, wherein:

the target system is a system including an iterative structure;
there are L individual unit structures configuring the iterative structure, with K individual particles in a single unit structure;
the target system is a system including $K \times L = N$ individual particles;
the first oracle quantum circuit $O_F$ is a first oracle quantum circuit $O_F{}^{full}$ for the entire target system as expressed by following Equation (1A), wherein i is an identifying number to identify a spring inside an $l^{th}$ unit structure, and is an identifying number representing a spring connecting an $x^{th}$ particle inside the $l^{th}$ unit structure and the $y_i{}^{th}$ particle inside the $1 + \Delta l^{th}$ unit structure;
the second oracle quantum circuit $O_H$ is a second oracle quantum circuit $O_H{}^{full}$ for the entire target system as expressed by following Equation (2A), wherein $H_{\Delta l \neq 0, xy}$ represents components of the coefficient matrix at connection locations between different unit structures, and $H_{-1, xy} = -H_{+1, yx}$;
the first oracle quantum circuit $O_F{}^{sub}$ of the unit structure is expressed by following Equation (3A); and
the second oracle quantum circuit $O_H{}^{sub}$ of the unit structure is expressed by following Equation (4A),

$$O_F^{\mathbf{full}} \left|x, i\right\rangle \left|0\right\rangle \left|l, 0\right\rangle = \left|x, y_i\right\rangle \left|\Delta l_i\right\rangle \left|l, l + \Delta l_i\right\rangle$$

Equation (1A),

$$O_H^{\mathbf{full}} \left|x, y\right\rangle \left|\Delta l\right\rangle \left|z\right\rangle \left|l, l + \Delta l\right\rangle = \left|x, y\right\rangle \left|\Delta l\right\rangle \left|z \oplus H_{\Delta l, xy}\right\rangle \left|l, l + \Delta l\right\rangle$$

Equation (2A),

$$O_F^{\mathbf{sub}} \left|x, i\right\rangle \left|0\right\rangle = \left|x, y_i\right\rangle \left|\Delta l_i\right\rangle$$

Equation (3A),

$$O_H^{\mathbf{sub}} \left|x, y\right\rangle \left|\Delta l\right\rangle \left|z\right\rangle = \left|x, y\right\rangle \left|\Delta l\right\rangle \left|z \oplus H_{\Delta l, xy}\right\rangle$$

Equation (4A).

Supplement 6

A quantum information processing program for execution by a classical computer in a hybrid system including the classical computer and a quantum computer, the quantum information processing program causing the classical computer to execute processing including:

the classical computer transmitting, to the quantum computer, information related to a coefficient matrix when an equation of motion of a target system is expressed in a matrix format, and a quantum circuit that was generated based on a quantum state $|\psi\rangle$ corresponding to an eigenstate of the target system and that is a quantum circuit for executing quantum phase estimation;
the quantum computer acquiring a measurement result of an eigenvalue of the coefficient matrix by executing the quantum circuit and transmitting the eigenvalue measurement result to the classical computer; and
the classical computer computing an eigenfrequency of the target system based on the eigenvalue measurement result.

Supplement 7

A hybrid system including a classical computer and a quantum computer, wherein in the hybrid system:

the classical computer transmits, to the quantum computer, information related to a coefficient matrix when an equation of motion of a target system is expressed in a matrix format, and a quantum circuit that was generated based on a quantum state $|\psi>$ corresponding to an eigenstate of the target system and that is a quantum circuit for executing quantum phase estimation;
the quantum computer acquires a measurement result of an eigenvalue of the coefficient matrix by executing the quantum circuit and transmits the eigenvalue measurement result to the classical computer; and
the classical computer computes an eigenfrequency of the target system based on the eigenvalue measurement result.

Supplement 8

A hybrid system including plural classical computers and plural quantum computers, wherein in the hybrid system:

one or more classical computer from out of the plural classical computers transmits, to the quantum computers, information related to a coefficient matrix when an equation of motion of a target system is expressed in a matrix format, and a quantum circuit that was generated based on a quantum state $|\psi>$ corresponding to an eigenstate of the target system and that is a quantum circuit for executing quantum phase estimation;
one or more quantum computer from out of the plural quantum computers acquires a measurement result of an eigenvalue of the coefficient matrix by executing the quantum circuit and transmits the eigenvalue measurement result to the classical computer; and
one or more classical computer from out of the plural classical computers computes an eigenfrequency of the target system based on the eigenvalue measurement result.

The entire content of the disclosure of Japanese Patent Application No. 2023-116311 filed on July 14, 2023 is incorporated by reference in the present specification. All publications, patent applications and technical standards mentioned in the present specification are incorporated by reference in the present specification to the same extent as if each individual publication, patent application, or technical standard was specifically and individually indicated to be incorporated by reference.

**Claims**

1. A quantum information processing method for execution by a classical computer in a hybrid system including the classical computer and a quantum computer, the quantum information processing method comprising:

the classical computer transmitting, to the quantum computer, information related to a coefficient matrix when an equation of motion of a target system is expressed in a matrix format, and a quantum circuit that was generated based on a quantum state $|\psi>$ corresponding to an eigenstate of the target system and that is a quantum circuit for executing quantum phase estimation;
the quantum computer acquiring a measurement result of an eigenvalue of the coefficient matrix by executing the quantum circuit and transmitting the eigenvalue measurement result to the classical computer; and
the classical computer computing an eigenfrequency of the target system based on the eigenvalue measurement result.

2. The quantum information processing method of claim 1, wherein:

the quantum circuit for executing the quantum phase estimation is configured including

a first oracle quantum circuit $O_F$ for outputting a position in the coefficient matrix of a non-zero component of the coefficient matrix, and
a second oracle quantum circuit $O_H$ for outputting a component value present at the position when the position has been specified in the coefficient matrix; and

17

the quantum circuit for executing the quantum phase estimation is a quantum circuit embedded with the coefficient matrix by incorporating the first oracle quantum circuit $O_F$ and the second oracle quantum circuit $O_H$.

3. The quantum information processing method of claim 1, wherein:

the quantum circuit for executing the quantum phase estimation is configured including,

a first oracle quantum circuit $O_F$ for outputting a position in the coefficient matrix of a non-zero component of the coefficient matrix, and
a modified second oracle quantum circuit $O_H{}^{mod}$ including as elements rotation gates corresponding to each component in the coefficient matrix; and

the quantum circuit for executing the quantum phase estimation is a quantum circuit embedded with the coefficient matrix by incorporating the first oracle quantum circuit $O_F$ and the modified second oracle quantum circuit $O_H{}^{mod}$.

4. The quantum information processing method of claim 1, wherein:

a model expressing the target system includes $N = 2^n$ individual variables;
the classical computer

classically computes an initial state $|\psi_m>$ of the quantum state $|\psi>$ by course-graining the model expressing the target system to a system including $M = 2^m$ individual variables (wherein $M < N$), and
generates the quantum circuit for executing the quantum phase estimation based on the initial state $|\psi_m>$ of the quantum state $|\psi>$; and

the quantum computer
acquires a measurement result of an eigenvalue of the coefficient matrix by executing the quantum circuit in a state generated with a solution to the course-grained model embedded in the target system by adding a quantum state that includes n-m individual qubits and that is a superimposed state of an n-m individual qubit string to the initial state $|\psi_m>$ of the quantum state $|\psi>$.

5. The quantum information processing method of claim 2, wherein:

the target system is a system including an iterative structure;
there are L individual unit structures configuring the iterative structure, with K individual particles in a single unit structure;
the target system is a system including $K \times L = N$ individual particles;
the first oracle quantum circuit $O_F$ is a first oracle quantum circuit $O_F{}^{full}$ for the entire target system as expressed by following Equation (1A), wherein i is an identifying number to identify a spring inside an $l^{th}$ unit structure, and is an identifying number representing a spring connecting an $x^{th}$ particle inside the $l^{th}$ unit structure and the $y_i{}^{th}$ particle inside the $l + \Delta l^{th}$ unit structure;
the second oracle quantum circuit $O_H$ is a second oracle quantum circuit $O_H{}^{full}$ for the entire target system as expressed by following Equation (2A), wherein $H_{\Delta l \neq 0,\, xy}$ represents components of the coefficient matrix at connection locations between different unit structures, and $H_{-1,\, xy} = -H_{+1,\, yx}$;
the first oracle quantum circuit $O_F{}^{sub}$ of the unit structure is expressed by following Equation (3A); and
the second oracle quantum circuit $O_H{}^{sub}$ of the unit structure is expressed by following Equation (4A),

$$O_F^{\text{full}} \ket{x, i} \ket{0} \ket{l, 0} = \ket{x, y_i} \ket{\Delta l_i} \ket{l, l + \Delta l_i}$$

Equation (1A),

$$O_H^{\text{full}} \ket{x, y} \ket{\Delta l} \ket{z} \ket{l, l + \Delta l} = \ket{x, y} \ket{\Delta l} \ket{z \oplus H_{\Delta l, xy}} \ket{l, l + \Delta l}$$

Equation (2A),

$$O_F^{\mathrm{sub}} \left| x, i \right\rangle \left| 0 \right\rangle = \left| x, y_i \right\rangle \left| \Delta l_i \right\rangle$$

Equation (3A),

$$O_H^{\mathrm{sub}} \left| x, y \right\rangle \left| \Delta l \right\rangle \left| z \right\rangle = \left| x, y \right\rangle \left| \Delta l \right\rangle \left| z \oplus H_{\Delta l, xy} \right\rangle$$

Equation (4A).

6. A quantum information processing program for execution by a classical computer in a hybrid system including the classical computer and a quantum computer, the quantum information processing program causing the classical computer to execute processing including:

the classical computer transmitting, to the quantum computer, information related to a coefficient matrix when an equation of motion of a target system is expressed in a matrix format, and a quantum circuit that was generated based on a quantum state |ψ> corresponding to an eigenstate of the target system and that is a quantum circuit for executing quantum phase estimation;
the quantum computer acquiring a measurement result of an eigenvalue of the coefficient matrix by executing the quantum circuit and transmitting the eigenvalue measurement result to the classical computer; and
the classical computer computing an eigenfrequency of the target system based on the eigenvalue measurement result.

7. A hybrid system comprising a classical computer and a quantum computer, wherein in the hybrid system:

the classical computer transmits, to the quantum computer, information related to a coefficient matrix when an equation of motion of a target system is expressed in a matrix format, and a quantum circuit that was generated based on a quantum state |ψ> corresponding to an eigenstate of the target system and that is a quantum circuit for executing quantum phase estimation;
the quantum computer acquires a measurement result of an eigenvalue of the coefficient matrix by executing the quantum circuit and transmits the eigenvalue measurement result to the classical computer; and
the classical computer computes an eigenfrequency of the target system based on the eigenvalue measurement result.

8. A hybrid system comprising a plurality of classical computers and a plurality of quantum computers, wherein in the hybrid system:

one or more classical computer of the plurality of classical computers transmits, to the quantum computer, information related to a coefficient matrix when an equation of motion of a target system is expressed in a matrix format, and a quantum circuit that was generated based on a quantum state |ψ> corresponding to an eigenstate of the target system and that is a quantum circuit for executing quantum phase estimation;
one or more quantum computer of the plurality of quantum computers acquires a measurement result of an eigenvalue of the coefficient matrix by executing the quantum circuit and transmits the eigenvalue measurement result to the classical computer; and
one or more classical computer of the plurality of classical computers computes an eigenfrequency of the target system based on the eigenvalue measurement result.

FIG.1

# FIG.2

50

| 51 | 54 | 55 | 56 |
|---|---|---|---|
| CPU | INPUT/ OUTPUT I/F | R/W SECTION | NETWORK I/F |

57

STORAGE SECTION

MEMORY

53

52

FIG.3

# FIG.4

# FIG.5

FIG.6

FIG.7

FIG.8

adder$^+$

adder

x-y-1

$R_y(2\arccos\sqrt{H_{x(x-1)}})$

$R_y(2\arccos\sqrt{H_{x(x+1)}})$

$O_H^{\text{mod.}}$

$|x\rangle_x$

$|y\rangle_y$

$|0\rangle_z$

$|x\rangle_x$

$|y\rangle_y$

$=$

# FIG.9

```
   USER          CLASSICAL        QUANTUM
 TERMINAL   130   COMPUTER   110   COMPUTER   120
```

**TRANSMIT OBJECT-OF-COMPUTATION INFORMATION AND COMPUTATION METHOD INFORMATION** — S100

**RECEIVE OBJECT-OF-COMPUTATION INFORMATION AND COMPUTATION METHOD INFORMATION** — S102

**GENERATE QUANTUM CIRCUIT** — S104

**TRANSMIT VARIOUS INFORMATION** — S106

**RECEIVE VARIOUS INFORMATION** — S108

S110 — **ACQUIRE MEASUREMENT RESULT**

S112 — **TRANSMIT MEASUREMENT RESULT**

**ACQUIRE MEASUREMENT RESULT** — S114

**CONVERT MEASUREMENT RESULT INTO EIGENFREQUENCY** — S116

**TRANSMIT RESULT** — S118

**RECEIVE RESULT** — S120

```
   END             END              END
```

# FIG.10

FIG.11

EP 4 745 848 A1

$|x\rangle_x$  $O_H^{mod.}$  $|x\rangle_x$

$|y\rangle_y$  $|y\rangle_y$

$|0\rangle_z$

$=$

adder  $x\text{-}y\text{-}1$  $R_y(2\arccos\sqrt{\frac{k_1}{k_2}})$  $R_y(2\arccos\sqrt{\frac{k_1}{k_2}})$  adder$^+$

FIG.12

FIG.13

# FIG.14

# FIG.15

## INTERNATIONAL SEARCH REPORT

| International application No. |
|---|
| **PCT/JP2024/025394** |

| A. | CLASSIFICATION OF SUBJECT MATTER |
|---|---|

*G06N 10/20*(2022.01)i; *G06N 99/00*(2019.01)i
FI:    G06N10/20; G06N99/00 180

According to International Patent Classification (IPC) or to both national classification and IPC

| B. | FIELDS SEARCHED |
|---|---|

Minimum documentation searched (classification system followed by classification symbols)

G06N10/20; G06N99/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2020-187451 A (QUNASYS INC.) 19 November 2020 (2020-11-19)<br>entire text, all drawings | 1-8 |
| A | JP 2023-518706 A (BEIT INC.) 08 May 2023 (2023-05-08)<br>entire text, all drawings | 1-8 |
| A | WO 2023/089930 A1 (QUEMIX INC.) 25 May 2023 (2023-05-25)<br>entire text, all drawings | 1-8 |
| A | WO 2022/027916 A1 (HEFEI ORIGIN QUANTUM COMPUTING TECHNOLOGY CO., LTD.) 10 February 2022 (2022-02-10)<br>entire text, all drawings | 1-8 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 September 2024** | **17 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

INTERNATIONAL SEARCH REPORT
Information on patent family members

International application No.

**PCT/JP2024/025394**

| Patent document cited in search report | | | Publication date (day/month/year) | Patent family member(s) | | | Publication date (day/month/year) |
|---|---|---|---|---|---|---|---|
| JP | 2020-187451 | A | 19 November 2020 | US | 2021/0183476 | A1 | |
| | | | | entire text, all drawings | | | |
| | | | | WO | 2020/230794 | A1 | |
| | | | | EP | 3971794 | A1 | |
| | | | | CA | 3137475 | A1 | |
| JP | 2023-518706 | A | 08 May 2023 | US | 2021/0287127 | A1 | |
| | | | | entire text, all drawings | | | |
| | | | | WO | 2021/188333 | A1 | |
| | | | | EP | 4121912 | A1 | |
| | | | | KR | 10-2022-0155309 | A | |
| | | | | CA | 3168532 | A1 | |
| WO | 2023/089930 | A1 | 25 May 2023 | CA | 3235023 | A1 | |
| | | | | entire text, all drawings | | | |
| | | | | CN | 118235140 | A | |
| | | | | EP | 4401011 | A1 | |
| WO | 2022/027916 | A1 | 10 February 2022 | US | 2023/0297745 | A1 | |
| | | | | entire text, all drawings | | | |
| | | | | EP | 4195090 | A1 | |
| | | | | CN | 114091363 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023116311 A

**Non-patent literature cited in the description**

- **S. A. CUCCARO ; T. G. DRAPER ; S. A. KUTIN ; D. P. MOULTON**. A new quantum ripplecarry addition circuit. *arXiv:quant-ph/0410184*